# EUROPÄISCHE PATENTSCHRIFT

(11) **EP 0 983 281 B1**
(45) Veröffentlichungstag und Bekanntmachung des Hinweises auf die Patenterteilung: **15.01.2003**
(21) Anmeldenummer: 98925579.9
(22) Anmeldetag: 12.05.1998
(51) Int. Cl.: C07F 9/6568

(54) **VERFAHREN ZUR HERSTELLUNG VON ALUMINIUMSALZEN CYCLISCHER PHOSPHINSÄUREN**
METHOD FOR PRODUCING ALUMINIUM SALTS OF CYCLIC PHOSPHINIC ACIDS
PROCEDE DE PREPARATION DE SELS D'ALUMINIUM D'ACIDES PHOSPHINIQUES CYCLIQUES

(30) Priorität: 20.05.1997 DE 19720977
(43) Veröffentlichungstag der Anmeldung: 08.03.2000
(73) Patentinhaber: Ticona GmbH, 65451 Kelsterbach (DE)
(72) Erfinder: SEITZ, Thomas, D-68542 Heddesheim (DE)
(86) Internationale Anmeldenummer: EP9802767
(87) Internationale Veröffentlichungsnummer: WO98052955

(56) Entgegenhaltungen:
- EP-A- 0 699 708
- EP-A- 0 794 191
- BE-A- 700 042

## Beschreibung

Die Erfindung betrifft ein Verfahren zur Herstellung von Aluminiumsalzen cyclischer gesättigter oder ungesättigter Phosphinsäuren, insbesondere Aluminiumsalze von 1-Hydroxy-dihydrophospholoxiden und 1-Hydroxyphospholanoxiden.

Salze von Phosphinsäuren sind an sich bereits seit längerem bekannt und werden insbesondere als flammhemmende Zusätze für Thermoplaste wie Polyester oder Polyamide empfohlen. So werden in der DE-A1-2252258 Alkalisalze von Phosphinsäuren beschrieben. Sie müssen jedoch in verhältnismäßig großen Mengen zugesetzt werden und haben zum Teil einen ungünstigen korrosionsfördemden Einfluß auf die Verarbeitungsmaschinen.

In der EP-A3-0699708 werden Polyesterformmassen offenbart, die Calcium- oder Aluminiumsalze von Phosphinsäuren folgender Formeln enthalten: 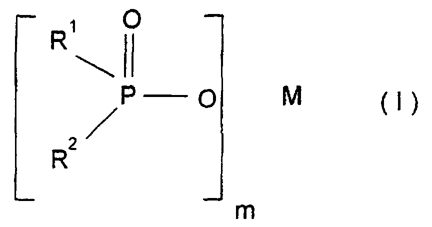 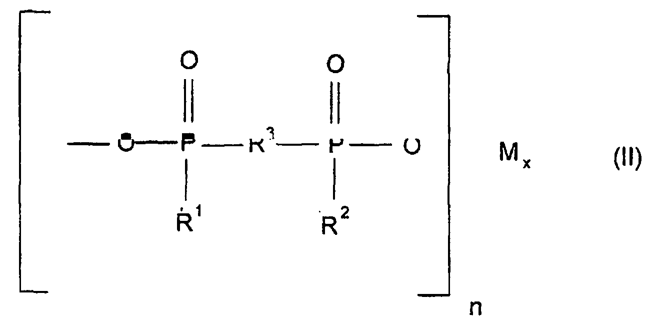 darin bedeuten
- R¹, R²: C₁-C₆-Alkyl, linear oder verzweigt; Phenyl;
- R³: C₁-C₁₀-Alkylen, linear oder verzweigt; Arylen; Alkylarylen; Arylalkylen;
- M: Calcium-, Aluminium-Ionen;
- m: 2 oder 3;
- n: 1 oder 3;
- x: 1 oder 2

Bei der Herstellung der in dieser europäischen Patentanmeldung beschriebenen Aluminiumsalze der dort erwähnten Phosphinsäuren wird eine verhältnismäßig lange Reaktionszeit gefordert, nämlich 24 beziehungweise sogar 65 Stunden.

Die EP-A1-794191 offenbart ein Verfahren zur Herstellung von Aluminiumsalzen cyclischer Phosphinsäuren. Auch dort sind sehr lange Reaktionszeiten erforderlich, nämlich mindestens 10 Stunden bzw. bis zu 168 Stunden.

Obwohl somit bereits eine ganze Reihe von Phosphinsäureverbindungen und Herstellungsverfahren für diese Verbindungen bekannt sind, besteht noch ein Bedürfnis nach verbesserten Verfahren zur Herstellung von geeigneten Phosphinsäuresalzen, die als Mittel zur Verbesserung der Flammfestigkeit von Kunststoffen eingesetzt werden können.

Aufgabe der Erfindung ist es deshalb, ein Verfahren zur Verfügung zu stellen, mit dem es möglich ist, wertvolle Phosphinsäuresalze herzustellen, die als Flammtestmittel eingesetzt werden Können; Autgabe der Erfindung ist es ferner ein Verfahren zur Verfügung zu stellen, das wirtschaftlich arbeitet und das in kurzen Umsetzzeiten zu hohen Ausbeuten führt. Aufgabe der Erfindung ist es femer ein Verfahren zur Verfügung zu stellen, das umweltfreundlich arbeitet und bei dem keine oder nur geringe Mengen an Stoffen anfallen, die bei der Isolierung des Endproduktes entfernt und entsorgt werden müssen.

Diese Aufgabe wird gelöst durch ein Verfahren zur Herstellung von Aluminiumsalzen cyclischer Phosphinsäuren, das dadurch gekennzeichnet ist, daß man cyclische Phosphinsäuren mit Aluminiumhydroxid in Gegenwart von Wasser und in Abwesenheit von polaren, organischen Lösungsmitteln bei erhöhter Temperatur in einer Reaktionszeit von 1 bis 10 Stunden und einem Druck von 2 bis 10 bar umsetzt. Vorzugsweise wird die Umsetzung in einer Zeitspanne von 3 bis 7 Stunden durchgeführt. Besonders vorteilhaft sind Reaktionstemperaturen von 50 bis 200°C, insbesondere 80 bis 100°C. Es ist vorteilhaft, 1 Mol Säure mit 1/3 Mol Aluminiumhydroxid in Gegenwart von 0,5 bis 3 ml Wasser, berechnet pro Gramm Säure umzusetzen; vorzugsweise werden 1 bis 2 ml Wasser pro Gramm Säure verwendet.

Als cyclische Phosphinsäuren werden zur Umsetzung mit Aluminiumhydroxid, bevorzugt 1-Hydroxy-dihydrophospholoxide gemäß der Formel I a oder I b und 1-Hydroxyphopholanoxide gemäß der Formel I c oder Gemische davon 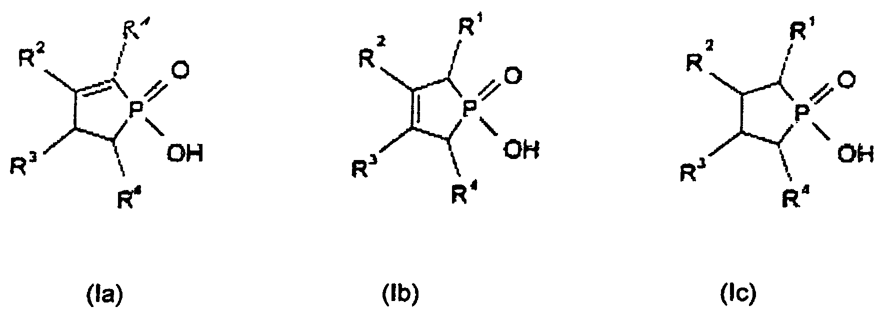 verwendet, worin R¹, R², R³, R⁴ Wasserstoff oder Alkyl bevorzugt C₁-C₁₂-Alkyl, insbesondere C₁-C₄-Alkyl, vorzugsweise Methyl, Ethyl bedeuten.
Man kann die Umsetzung unter Druck durchführen, bevorzugt wird die Umsetzung in einem Autoklaven unter autogenem Druck durchgeführt.

Die erfindungsgemäß eingesetzten cyclischen Phosphinsäuren können durch Hydrolyse entsprechender cyclischer Chlorverbindungen erhalten werden. So wird die Herstellung von 1 -Chlor-dihydrophospholoxid und die Hydrolyse dieser Verbindung zu 1-Hydroxy-dihydrophospholoxid in SYN. REACT. INORG. METAL-ORG. CHEM., 5(1), 45-58 (1975) von Kurt Moedritzer beschrieben. Eine weitere Synthese-Möglichkeit zur Herstellung von solchen Chlorverbindungen findet sich in der EP-A1-0452755. Die gesättigten cyclischen Phosphinsäuren können durch Hydrierung der entsprechenden ungesättigten cyclischen Phosphinsäuren gewonnen werden.

Zur Herstellung der entsprechenden Aluminiumsalze werden die Phosphinsäuren in Wasser gelöst und mit Aluminiumhydroxid umgesetzt. Wenn es auch nicht unbedingt notwendig ist, die Umsetzung in genau stöchiometrischen Verhältnissen durchzuführen, so ist es doch zweckmäßig, pro Mol Säure 1/3 Mol Aluminiumhydroxid zu verwenden. Auch die bei der Umsetzung verwendete Menge Wasser kann in weiten Bereichen schwanken. Es ist jedoch vorteilhaft, pro Gramm eingesetzte Säure etwa 1 bis 2 ml Wasser einzusetzen.

Die Umsetzung wird bei erhöhter Temperatur durchgeführt, wobei das Reaktionsgemisch vorteilhafterweise während der Umsetzung gerührt wird. Es ist vorteilhaft, eine Temperatur von mindestens 50°C einzuhalten, sehr geeignet ist der Temperaturbereich 80 bis 100°C.

Die Reaktion kann auch bei Temperaturen über 100°C durchgeführt werden, wobei Temperaturen bis zu 200°C besonders vorteilhaft sind.

Als für das erfindungsgemäße Verfahren geeignete cyclische Phosphinsäuren haben sich unter anderem folgende Verbindungen bewährt.

1-Hydroxy-3-methyl-2,5-dihydro-1H-phosphol-1oxid, 1-Hydroxy-3-methyl-1Hphospholan-1oxid, 1-Hydroxy-2,3-dihydro-1H-phosphol-1oxid, 1-Hydroxy-2,5-dihydro-1H-phosphol-1oxid und 1-Hydroxy-1H.phospholan-1oxid.

Die Zeiten für die Umsetzung gemäß der Erfindung betragen im allgemeinen höchstens 20 Stunden, liegen jedoch meistens erheblich darunter; es ist vorteilhaft, die Umsetzung innerhalb einer Zeit von 1 bis 10, insbesondere von 3 bis 7 Stunden durchzuführen. Sehr vorteilhaft ist es auch, die Reaktion in einem Autoklaven unter autogenem Druck durchzuführen, das heißt, die Reaktionskomponenten cyclische Phosphinsäure, Aluminiumhydroxid sowie Wasser werden in einen Autoklaven gebracht und dort unter autogenem Druck zur Umsetzung gebracht, das heißt, die Reaktionsmischung wird im Autoklaven im geschlossenen System erwärmt, so daß die Umsetzung unter dem Druck, der bei der Erwärmung entsteht, durchgeführt wird.

Die Umsetzung wird ohne Zusatz von polaren, organischen Lösungsmitteln wie Essigsäure, Propionsäure, Methanol, Ethanol, Propanol, Butanol, Aceton, Methylethylketon, Tetrahydrofuran, Dioxan, Acetonitril und dergleichen durchgeführt.

Es war besonders überraschend, daß es mittels des erfindungsgemäßen Verfahrens möglich ist, innerhalb kurzer Reaktionszeiten die wertvollen Aluminiumsalze von cyclischen gesättigten und ungesättigten Phosphinsäuren herzustellen. Im Gegensatz zu den langen Reaktionszeiten von 24 beziehungsweise 65 Stunden, wie sie für die Herstellung von Aluminiumsalzen von nicht cyclischen Salzen von Phosphinsäuren erforderlich sind, kann gemäß der Erfindung mit wesentlich kürzeren Reaktionszeiten gearbeitet werden. Meistens reicht eine Reaktionszeit von höchstens 7 Stunden bereits aus, um sehr hohe Ausbeuten zu erhalten.

Das Verfahren liefert sehr wertvoile Aluminiumsalze cyclischer Phosphinsäuren, die insbesondere als Flammschutzmittel für Kunststoffe wie Polyamide, insbesondere Polyester, verwendet werden können.

Da die Umsetzung lediglich 3 Komponenten, nämlich die Phosphinsäure, das Aluminiurmydroxid und Wasser, benötigt, ist das Verfahren auch sehr umweltfreundlich; ein Entfernen und Entsorgen von Nebenprodukten beziehungsweise unerwünschten Stoffen, wie organische Lösungsmittel, ist nicht erforderlich.

Die Erfindung wird durch folgende Beispiele näher erläutert:

### Beispiel 1:

### Aluminiumsalz des Isomerengemisches aus 1-Hydroxy-2,5-dihydro-1H-phosphol-1-oxid und 1-Hydroxy-2,3-dihydro-1H-phosphol-1-oxid(4:1)

10,0 g (84,7 mMol) eines Gemisches aus 1-Hydroxy-2,5-dihydro-1H-phosphol-1-oxid und 1-Hydroxy-2,3-dihydro-1H-phosphol-1-oxid (im Verhältnis 4:1) werden in 16 ml Wasser gelöst. Bei 80°C gibt man 2,2 g (27,8 mMol) Aluminiumhydroxid zu und läßt die Suspension während der angegebenen Reaktionszeit bei 85 bis 90°C rühren. Dann wird bei ca. 60°C abgesaugt und bei 140 - 150°C im Vakuum-Trockenschrank getrocknet. Man erhält das Reaktionsprodukt als blaßgelbes Pulver mit einem Fp. von > 380°C.

| **Nr.** **1** | **Reaktionsdauer** **[h]** | **Ausbeute** **[g]** | **Ausbeute** **[% d. Th.]** |
|---|---|---|---|
| a | 1 | 9,0 | 84 |
| b | 3 | 10,7 | 100 |
| c | 5 | 10,7 | 100 |
| d | 7 | 10,7 | 100 |

### Beispiel 2:

### Aluminiumsalz von 1-Hydroxy-1H-phospholan-1-oxid

10,0 g (83,3 mMol) 1-Hydroxy-1H-phospholan-1-oxid werden in 16 ml Wasser gelöst. Bei 80°C gibt man 2,2 g (27,8 mMol) Aluminiumhydroxid zu und läßt die Suspension während der angegebenen Reaktionszeit bei 85 bis 90°C rühren. Dann wird bei ca. 60°C abgesaugt und bei 140-150°C im Vakuum-Trockenschrank getrocknet. Man erhält das Reaktionsprodukt als farbloses Pulver mit einem Fp. von > 380°C.

| **Nr.** **2** | **Reaktionsdauer** **[h]** | **Ausbeute** **[g]** | **Ausbeute** **[% d. Th.]** |
|---|---|---|---|
| a | 1 | 6,4 | 60 |
| b | 2 | 8,5 | 80 |
| c | 3 | 9,7 | 91 |
| d | 5 | 9,8 | 92 |
| e | 7 | 9,8 | 92 |

### Beispiel 3:

### Aluminiumsalz von 1-Hydroxy-3-methyl-1H-phospholan-1-oxid

10,0 g (75,7 mMol) 1-Hydroxy-3-methyl-1H-phospholan-1-oxid werden in 16 ml Wasser gelöst. Bei 80°C gibt man 2,0 g (25,2 mMol) Aluminiumhydroxid zu und läßt die Suspension während der angegebenen Reaktionszeit bei 85 bis 90°C rühren. Dann wird bei ca. 60°C abgesaugt und bei 140 - 150°C im Vakuum-Trockenschrank getrocknet. Man erhält das Reaktionsprodukt als farbloses Pulver mit einem Fp. von > 380°C.

| **Nr.** **3** | **Reaktionsdauer** **[h]** | **Ausbeute** **[g]** | **Ausbeute** **[% d. Th.]** |
|---|---|---|---|
| a | 1 | 9,8 | 92 |
| b | 2 | 0,8 | 02 |
| c | 3 | 9,9 | 93 |
| d | 5 | 10,0 | 94 |
| e | 7 | 10,2 | 96 |

### Vergleichsbeispiel 1 (Nr. 4)

### Aluminiumsalz der Ethyl-methyl-phosphinsäure (Vergleichsbeispiel)

10,0 g (92,5 mMol) Ethyl-methyl-phophinsäure werden in 16 ml Wasser gelöst. Bei 80°C gibt man 2,4 g (30,8 mMol) Aluminiumhydroxid zu und läßt die Suspension während der angegebenen Reaktionszeit bei 85 bis 90°C rühren. Dann wird bei ca. 60°C abgesaugt und bei 140 - 150°C im Vakuum-Trockenschrank getrocknet. Man erhält das Reaktionsprodukt als farbloses Pulver mit einem Fp. von > 380°C.

| **Nr.** **4** | **Reaktionsdauer** **[h]** | **Ausbeute** **[g]** | **Ausbeute** **[% d. Th.]** |
|---|---|---|---|
| a | 3 | 9,8 | 66 |
| b | 5 | 9,8 | 70 |
| c | 7 | 9,9 | 80 |
| d | 15 | 10,0 | 86 |
| e | 20 | 10,2 | 94 |
| f | 50 | 10,2 | 94 |

### Vergleichsbeispiel 2 (Nr. 5)

### Aluminiumsalz der n-Butyl-methyl-phosphinsäure (Vergteichsbeispiel)

10,0 g (73,5 mMol) n-Butyl-methyl-phosphinsäure werden in 16 ml Wasser gelöst. Bei 80°C gibt man 1,9 g (24,5 mMol) Aluminiumhydroxid zu und läßt die Suspension während der angegebenen Reaktionszeit bei 85 bis 90°C rühren. Dann wird bei ca. 60°C abgesaugt und bei 140 - 150°C im Vakuum-Trockenschrank getrocknet. Man erhält das Reaktionsprodukt als farbloses Pulver mit einem Fp. von > 380°C.

| **Nr.** **5** | **Reaktionsdauer** **[h]** | **Ausbeute** **[g]** | **Ausbeute** **[% d. Th.]** |
|---|---|---|---|
| a | 3 | 7,9 | 75 |
| b | 5 | 8,0 | 76 |
| c | 7 | 8,5 | 80 |
| d | 15 | 9,6 | 91 |
| e | 20 | 9,6 | 91 |
| f | 50 | 9,7 | 92 |

## Patentansprüche

1. Verfahren zur Herstellung von Aluminiumsalzen cyclischer Phosphinsäuren, **dadurch gekennzeichnet, dass** man cydische Phosphinsäuren mit Aluminiumhydroxid in Gegenwart von Wasser und in Abwesenheit von polaren, organischen Lösungsmitteln bei erhöhter Temperatur und einem Druck von 2 bis 10 bar in einer Reaktionszeit von 1 bis 10 Stunden umsetzt.

2. Verfahren nach Anspruch 1, **dadurch gekennzeichnet, dass** man die Umsetzung in einer Reaktionszeit von 3 bis 7 Stunden durchführt.

3. Verfahren nach einem der Ansprüche 1 oder 2, **dadurch gekennzeichnet, dass** man die Umsetzung bei einer Temperatur von 50 bis 200 °C durchführt.

4. Verfahren nach Anspruch 3, **dadurch gekennzeichnet, dass** man die Umsetzung bei einer Temperatur von 80 bis 100 °C durchführt.

5. Verfahren nach einem oder mehreren der Ansprüche 1 bis 4, **dadurch gekennzeichnet, dass** man ein Mol cyclischer Phosphinsäure mit 1/3 Mol Aluminiumhydroxid in Gegenwart von 0,5 bis 3 ml Wasser, berechnet pro Gramm Säure, umsetzt.

6. Verfahren nach Anspruch 5, **dadurch gekennzeichnet, dass** man 1 bis 2 ml Wasser pro Gramm Säure verwendet.

7. Verfahren nach einem oder mehreren der Ansprüche 1 bis 6, dadurch geKennzeicnnet, dass man als cyclische Phosphinsäuren 1-Hydroxy-dihydrophospholoxide gemäß der Formel (la) oder (Ib) oder 1-Hydroxydihydrophospholanoxide gemäß der Formel (Ic) oder Gemische davon verwendet, worin R¹, R², R³ und R⁴ Wasserstoff oder Alkyl, bevorzugt C₁ - C₁₂ - Alkyl, insbesondere C₁ - C₄ - Alkyl, vorzugsweise Methyl, Ethyl bedeuten.

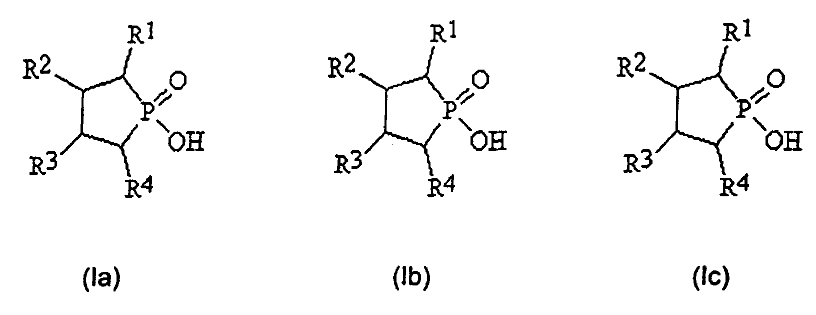

8. Verfahren nach einem oder mehreren der Ansprüche 1 bis 7, **dadurch gekennzeichnet, dass** man die Reaktion in einem Autoklaven unter autogenem Druck durchführt.

## Claims

1. A method for producing aluminum salts of cyclic phosphinic acids, which comprises reacting cyclic phosphinic acids with aluminum hydroxide in the presence of water and in the absence of polar organic solvents at elevated temperature and at a pressure of from 2 to 10 bar for a reaction time of from 1 to 10 hours.

2. The method as claimed in claim 1, wherein the reaction is carried out for a reaction time of from 3 to 7 hours.

3. The method as claimed in either of claims 1 or 2, wherein the reaction is carried out at a temperature of from 50 to 200°C.

4. The method as claimed in claim 3, wherein the reaction is carried out at a temperature of from 80 to 100°C.

5. The method as claimed in one or more of claims 1 to 4, wherein one mole of cyclic phosphinic acid is reacted with 1/3 of a mole of aluminum hydroxide in the presence of from 0.5 to 3 ml of water, calculated per gram of acid.

6. The method as claimed in claim 5, wherein from 1 to 2 ml of water are used per gram of acid.

7. The method as claimed in one or more of claims 1 to 6, wherein the cyclic phosphinic acids used are 1-hydroxydihydrophosphole oxides of the formula (la) or (Ib) or 1-hydroxydihydrophospholane oxides of the formula (Ic) or mixtures thereof, in which R¹, R², R³ and R⁴ are hydrogen or alkyl, preferably C₁-C₁₂-alkyl, in particular C₁-C₄-alkyl, preferably methyl or ethyl.

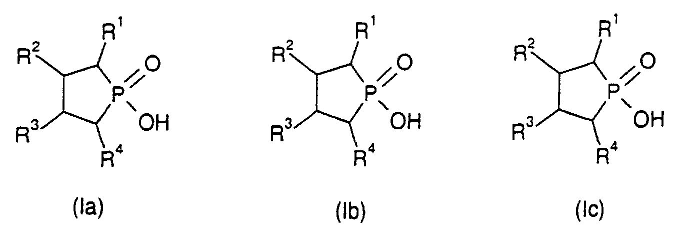

8. The method as claimed in one or more claims 1 to 7, wherein the reaction is carried out in an autoclave under autogenous pressure.

## Revendications

1. Procédé de fabrication de sels d'aluminium d'acides phosphiniques cycliques, **caractérisé en ce que** l'on fait réagir les acides phosphiniques cycliques avec de l'hydroxyde d'aluminium en présence d'eau et en l'absence de solvants organiques polaires, à température élevée et sous une pression de 2 à 10 bars pendant un temps de réaction de 1 à 10 heures.

2. Procédé selon la revendication 1, **caractérisé en ce que** l'on effectue la réaction en un temps de réaction de 3 à 7 heures.

3. Procédé selon la revendication 1 ou 2, **caractérisé en ce que** l'on effectue la réaction à une température de 50 à 200°C.

4. Procédé selon la revendication 3, **caractérisé en ce que** l'on effectue la réaction à une température de 80 à 100°C.

5. Procédé selon l'une quelconque ou plusieurs des revendications 1 à 4, **caractérisé en ce que** l'on fait réagir une mole d'acide phosphinique cyclique avec 1/3 de mole d'hydroxyde d'aluminium en présence de 0,5 à 3 ml d'eau, le calcul étant fait par gramme d'acide.

6. Procédé selon la revendication 5, **caractérisé en ce que** l'on utilise de 1 à 2 ml d'eau par gramme d'acide.

7. Procédé selon l'une quelconque ou plusieurs des revendications 1 à 6, **caractérisé en ce que** l'on utilise, en tant qu'acides phosphiniques cycliques, des 1-hydroxydihydrophospholoxydes selon la formule (Ia) ou (Ib) ou des 1-hydroxydihydrophospholanoxydes selon la formule (Ic) ou des mélanges de ces derniers, R¹, R², R³ et R⁴ désignant l'hydrogène ou un radical alkyle, de préférence un radical alkyle en C₁-C₁₂, en particulier un radical alkyle en C₁-C₄, de préférence un radical méthyle, éthyle.

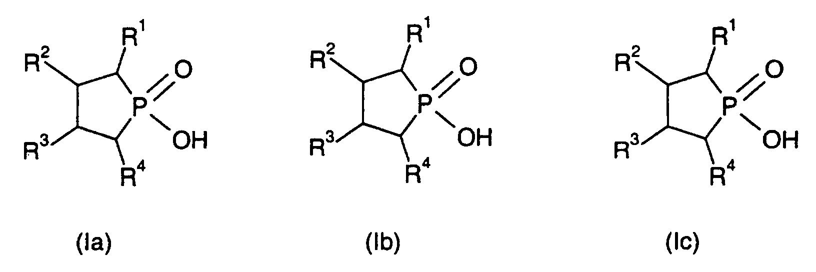

8. Procédé selon l'une quelconque ou plusieurs des revendications 1 à 7, **caractérisé en ce que** l'on effectue la réaction dans un autoclave sous pression autogène.
